# EUROPEAN PATENT APPLICATION

(11) **EP 3 372 833 A1**
(43) Date of publication of application: **12.09.2018**
(21) Application number: 17160007.5
(22) Date of filing: 09.03.2017
(51) Int. Cl.: F03G 6/06, F02G 1/055, F24J 2/07

(54) **HYBRID SOLAR POWERED STIRLING ENGINE**

(71) Applicant: Ripasso Energy AB, 421 30 Västra Frölunda (SE)
(72) Inventor: LARSSON, Gunnar, 414 83 GÖTEBORG (SE); JENSEN, Christian, 374 33 Kalrshamn (SE)
(74) Representative: AWA Sweden AB

(57) **Abstract**

A hybrid energy conversion system comprising a sun concentrator, a radiation-to-heat exchanger arranged in a radiation chamber and configured to receive high density sun radiation from the sun concentrator through an entrance of the radiation chamber, a Stirling engine operable to convert heat from the radiation-to-heat exchanger into mechanical energy, and a burner configured to generate combustion energy for operation of the Stirling engine by combustion of a suitable fuel. The combustion chamber has an exhaust outlet for removal of combustion gases from the chamber, which exhaust outlet is arranged to create a flow of combustion gas from the entrance past a front portion of the radiation-heat-exchanger.

By creating a flow of combustion gas past a front part of the radiation-to-heat-exchanger (i.e. a part facing the entrance of the radiation chamber), energy transfer by heat convection is improved.

## Description

### Field of the invention

The present invention relates to a hybrid energy conversion system using sun radiation as primary power source, and an alternative combustion fuel as secondary power source.

### Background of the invention

With the threat of global warming becoming more imminent, the interest in renewal energy sources has increased rapidly. One source of renewable power is the sun, and various techniques are available for extracting power from sun radiation. Two of the most widely spread sun power technologies are fluid carrying channel systems which are warmed by the sun, and solar panels where silicon based panels generate electricity when radiated by the sun.

Another technology, which has gained increased popularity in recent years, is to convert solar energy to mechanical energy in a Stirling engine. The mechanical energy can then be used to generate electricity.

Typically, a parabolic concentrator is used to collect and concentrate solar radiation, and the Stirling engine is arranged in the focal point of the concentrator. The concentrator may be provided with a mechanical support mechanism which automatically adjusts the position and orientation of the concentrator to face the sun. Such concentrators are referred to as "solar-tracking". Systems of this type are developed by Ripasso Energy AB in Sweden.

Obviously, a solar powered Stirling engine will be unable to deliver energy at times when sufficient solar power is not available, e.g. at night and during cloudy conditions. For this reason, it is desirable to combine the solar energy source with a secondary energy source which is independent of the sun. Such systems are referred to as hybrid systems. The secondary energy source is preferably a liquid or gas combustion fuel such as biogas.

An example of such a hybrid system is disclosed by CN 102877980. According to this solution, the Stirling engine is arranged separate from the solar energy concentrator and a combustion chamber, which are selectively used to power the Stirling engine.

Document KR 101454285 very schematically discloses another example. In this document, the solar chamber used to collect solar radiation to heat the heating unit of the Stirling engine is used also as a combustion chamber for a secondary fuel. The combustion chamber needs to be closed during combustion mode, either by a transparent window which allows solar radiation to pass, or by a movable cover. The cover is in an open state during solar mode, and in a closed state during combustion mode.

A major challenge is to convert as much power as possible from the combustion into heat for operation of the Stirling engine. In particular, it is desirable to extract as much energy as possible from the combustion gases. The prior art, such as CN 102877980 and KR 101454285, do not elaborate on heat exchange between the combustion gases and the Stirling engine.

Document CN2597893 discloses another example of a hybrid system with a burner within a solar chamber closed by a transparent window. Here, the burner directs a plurality of flames directly towards the heat exchanger. Also document CN2597893 does not elaborate on how heat exchange is optimized with respect to combustion gases.

Further, in order to be efficient in solar mode, the Stirling engine includes a radiation-to-heat exchanger which is highly specialized for receiving concentrated solar radiation from the sun concentrator. For example, it may include a set of tube loops with a circular cross section containing a working gas. A further challenge when designing a hybrid system is to provide satisfactory efficiency also during combustion mode, without significantly redesigning the specialized radiation-to-heat exchanger.

### General disclosure of the invention

It is an object of the present invention to overcome, or at least mitigate, these problems with the prior art, and provide an improved hybrid solar powered Stirling engine where heat energy present in combustion gases is used in a more efficient manner, without significantly affecting performance in solar mode.

According to a first aspect of the present invention, this and other objects are achieved by a hybrid energy conversion system comprising a sun concentrator for providing high density sun radiation, a radiation-to-heat exchanger arranged in a radiation chamber and configured to receive high density sun radiation from the sun concentrator through an entrance of the radiation chamber in a main radiation reception direction along a central axis of the system, a Stirling engine operable to convert heat from the radiation-to-heat exchanger into mechanical energy, and a burner configured to generate combustion energy for operation of the Stirling engine by combustion of a suitable fuel. The combustion chamber has an exhaust outlet for removal of combustion gases from the chamber, the exhaust outlet at least partially enclosing the central axis, wherein the exhaust outlet is arranged to create a flow of combustion gas from the entrance past a front portion of the radiation-heat-exchanger.

Such a system thus has a solar mode, where the Stirling engine is driven by solar energy received in the radiation chamber, and a combustion mode, where the Stirling engine is driven by heat from a combustion process. The combustion energy can be generated outside the radiation chamber, in which cases combustion gases are fed into the radiation chamber in order to deliver heat energy to the radiation-to-heat exchanger. Preferably, however, the radiation chamber is used as a combustion chamber, such that the combustion energy is generated inside the radiation chamber and also maximizing the combustion radiation which the radiation to heat exchanger is optimized to receive.

The central axis should be understood as an axis normal to an aperture plane of the sun concentrator, aligned through the focal point of the sun concentrator.

By creating a flow of combustion gas past a front part of the radiation-to-heat-exchanger (i.e. a part facing the entrance of the radiation chamber), energy transfer by heat convection is improved. The heat energy present in the combustion gas is moved towards the radiation-to-heat exchanger and eventually into contact with the radiation-to-heat exchanger.

As the exhaust outlet encloses the central axis, the combustion gases are directed radially outwards past all parts of the heat exchanger, thereby further increasing the interaction (convection) with the heat exchanger. For example, the exhaust outlet may comprise a plurality of openings in the radiation chamber, distributed around the central axis. However, a continuous opening surrounding the central axis is also possible.

The increased heat convection improves the maximum power that can be delivered by the system. Also, the temperature of the exhaust gases can be reduced, leading to design benefits. For example, the cost of a heat recuperator can be reduced with maintained efficiency, both in terms of advanced heat resilient materials and required size. Alternatively, the efficiency of the recuperator can be increased without increasing cost. Another benefit of reducing the temperature of exhaust gases is reduced dissipation losses for a given amount of isolation.

In one embodiment, the radiation-heat-exchanger comprises a set of tube loops wherein the radiation-heat-exchanger comprises a set of tube loops connected to the Stirling engine and configured to conduct a heat carrying medium (typically referred to as "working gas") for operation of the Stirling engine, the tube loops being distributed around the central axis and extending axially into the radiation chamber, and wherein the exhaust outlet is arranged to create a flow of combustion gas past the tube loops in a direction with a radial component with respect to the central axis. Such radial flow of gas past the tubes significantly increase heat convection.

Such a tube loop design of a radiation-heat-exchanger can be specifically designed to withstand also very elevated radiation in especially solar mode. It is noted that in solar mode, the radiation-to-heat exchanger will be subject to extremely concentrated solar radiation. Also, in solar mode as well as in combustion mode, the temperature in the radiation chamber will be such that significant radiation is caused from the chamber walls. To handle such elevated radiation, the tubes of the radiation-to-heat exchanger have a circular cross section and are constantly and evenly cooled by the Stirling engine working gas.

The tube loops are typically designed so as to form a radiation exposed part, facing the entrance of the radiation chamber, and a radiation shielded part located beyond the radiation receiving part so as to be substantially shielded from incoming radiation by the radiation receiving part.

In the radiation exposed part, the circular cross-section is a prerequisite for radiation resilience of the tubes during solar mode. The tube loops may further extend relatively closer to each other, so as to form a relatively dense surface, thereby maximizing the radiation receiving surface and thus improving energy conversion from radiation to heat (in both solar and combustion mode). The dense structure also improves heat convection from combustion gases (during combustion mode).

The portion of each tube loop extending through the radiation shielded part is preferably as short as possible, as any tube volume in this part will not be exposed to heat radiation and thus only increase the dead volume of gas within the Stirling engine, leading to reduced efficiency (especially in solar mode, but also in combustion mode). Therefore, these tube portions should preferably not be curved in a similar manner as in the radiation exposed part, and are thus typically more separated from each other. This, in combination with the circular cross section may result in unsatisfactory heat convection due to the limited surface area exposed to the flow of hot cumbustion gases.

For this purpose, at least a portion of each tube loop in the radiation shielded part can be provided with a heat convection structure configured to promote heat convection from the combustion gas to the heat carrying medium in the tube loops. Such heat convection structures should typically provide a surface enlargement of the tube, i.e. increase in outer cross section. It is noted that such surface enlargement should be protected from intense radiation e.g. by being applied to tube parts not exposed to direct solar radiation in solar mode, in order to avoid damage or require very advanced and expensive materials.

For reasons explained above, the heat convection structures are preferably formed without extending the length of the tube loops. One option is to increase the cross section of the tube loops. However, a more preferred option is to form the heat convection structures separately from the tube loops and then attach them thereon.

It is noted that the present invention makes it possible to create a flow of combustion gases that passes first the radiation exposed part and then the radiation shielded part. By providing the heat convection means on the radiation shielded part, heat exchange by convection can be significantly increased.

As an example, the flame temperature in the combustion can be around 1650 degrees C. On the other side of the radiation exposed part of the radiation-to-heat exchanger, the temperature of the combustion gases may be around 1000 degrees C after transferring energy to the working gas in the tubes by radiation as well as convection. After passing the radiation shielded part, where additional energy is transferred by convection, the temperature of the combustion gases may be around 800 degrees when implementing embodiments of the present invention.

In one embodiment, each tube loop has an inner section extending along the central axis and an outer section extending along the central axis radially outside the inner section, and a U-bend a distance into the radiation chamber connecting the inner and outer section, wherein the outer sections belong to the radiation shielded part.

Preferably, the U-bends are curved to form a structure extending in a plane normal to the central axis, and absorbing/receiving heat radiation and thus substantially preventing heat radiation from penetrating axially past the structure, the structure belonging to the radiation exposed part. This structure can have an annular shape, extending radially from the inner sections to a location proximal to the chamber wall, thereby substantially shielding the outer sections of the tube loops from heat radiation.

The annular structure can be concave towards the entrance of the radiation chamber and thus resemble an inverted umbrella. Beneath the umbrella the ring of second sections are "shaded" from radiation.

The second section are preferably substantially parallel to each other in order to minimize the length of the tubes. As mentioned, longer tubes, especially in areas not subject to concentrated solar radiation, will reduce the efficiency of the Stirling engine.

In a preferred embodiment, the outer sections are provided with heat convection structures configured to promote heat convection from the combustion gas to the heat carrying medium in the tube loops.

It is noted that parallel outer sections are typically a result of manufacturing, where a distance may be required between the curved portions of the tube loops. The outer sections, which are at a larger radial distance than the inner sections, are also separated from each other. This makes them a very suitable location for heat convection structures according to embodiments of the invention. It is noted that the shape and design of the radiation-to-heat exchanger, which is optimized for solar mode, thus does not need to be substantially modified to accommodate the heat convection means.

In addition to the radiation protection provided from the radiation exposed part of the radiation-to-heat-exchanger, it may be advantageous to provide an additional radiation shield for protecting especially a portion of the heat convection structures adjacent to the radiation exposed part.

Tests indicate that heat convection structures according to embodiments of the invention, arranged along portions of tubes which are not subject to the most intense solar radiation, potentially can increase the maximum power in combustion mode by as much as 20%. Additionally, by removing heat from the combustion gases, the temperature of exhaust gas can potentially be lowered from around 1000 degrees C to around 800 degrees C. It is noted that this reduction in gas temperature supplied to the recuperator will lead to significantly relaxed requirements in recuperator specification and design. As mentioned, a lower exhaust temperature reduces the cost of a recuperator included in the system, and also reduces losses in the recuperator and external circulation circuit.

The burner is preferably arranged between the entrance of the radiation chamber and the radiation-to-heat exchanger, at a distance from the radiation-to-heat exchanger, and configured to direct at least two burning flames into the radiation chamber in a flame direction, and the flame direction of each flame can be substantially transversal with respect to the central axis, such that no flame is directed towards the heat exchanger.

Such orientation of the flames will ensure that as much as possible of the generated heat is in the form of radiation directed towards the heat exchanger. In principle, the flames are preferably oriented such that the flames, and in particular the hottest parts of the flames, cover as large portion as possible of a cross section of the combustion chamber in a plane normal to the radiation direction. The larger such a portion is, the larger the radiation along the central axis will be (for a given temperature). One part of this radiation will be directed directly towards the heat exchanger, while another part will be reflected by inner walls of the chamber before it reaches the heat exchanger.

Preferably, the burner directs at least three (e.g. four, six or more) flames into the chamber, to further increase the covered portion of the cross section. The flames are preferable symmetrically distributed around in a plane normal to the central axis, in order to create an even distribution of heat and radiation.

The flames can be offset with respect to the center axis, such that, in operation, a distal end of a first flame can impact a base portion of a second, adjacent flame. The distal end of the first flame, where the gas pressure is lower, will thus be forced by the higher pressure part of the second flame in a different direction. If three or more flames are arranged in this manner, each flames will be "curved" by another flame, so that the flames will rotate together, and in combination form a rotating torus or wheel of flame.

Such arrangement of flames in a burner or furnace is generally referred to as "tangential firing", which is known per se in the art. Conventionally, tangential firing has been used to achieve uniform and complete combustion by the turbulent mixing that takes place in the combined flame. Tangential firing further increases combusition speed, such that the flames become shorter and the radiation density increases.

In many conventional applications of tangential firing, the very high radiation density can cause problems. In the present context, however, the increased radiation density is beneficial, as it improves the heat exchange with the radiation-to-heat exchanger. Further, as each flame is "curved" into the rotating torus, the end of the flames will not reach the oposing chamber wall, at least not at normal angle. Thereby, the risk of "hot spots" caused by gases penetrating the typically porous walls of the chamber may be reduced.

A major part of the heat radiation emitted from the rotating flame torus will be directed out of its plane, i.e. towards the radiation-to-heat exchanger and towards the entrance of the chamber, which during combustion needs to be closed by a cover. The cover can be transparent (a window), or a movable cover which closes the chamber only during combustion mode. In any case, this cover will be heated by radiation from the flames, and then emit heat radiation in mainly direction directly towards the radiation-to-heat exchanger. A smaller part of the radiation from the rotating flame torus will escape from the sides of the torus, and be absorbed by the side walls of the chamber.

### Brief description of the drawings

The present invention will be described in more detail with reference to the appended drawings, showing currently preferred embodiments of the invention.
Figure 1 is a schematic perspective view of an energy conversion system according to an embodiment of the present invention.
Figure 2 is a schematic block diagram of some parts of the system in figure 1.
Figure 3a-c show operation of the movable cover in figure 2.
Figure 4a-b show an arrangement of the burner in figure 1.
Figure 5 shows a partly broken away perspective view of a radiation chamber and a radiation-to-heat-exchanger according to an embodiment of the present invention.
Figure 6 shows the radiation chamber and radiation-to-heat exchanger in figure 4, with a portion of the radiation-to-heat exchanger cut away.
Figure 7 shows a perspective and partially exploded view of a quarter of the radiation-to-heat-exchanger in figure 4.
Figure 8 shows a heat convection structure according to an embodiment of the present invention.

### Detailed description of preferred embodiments

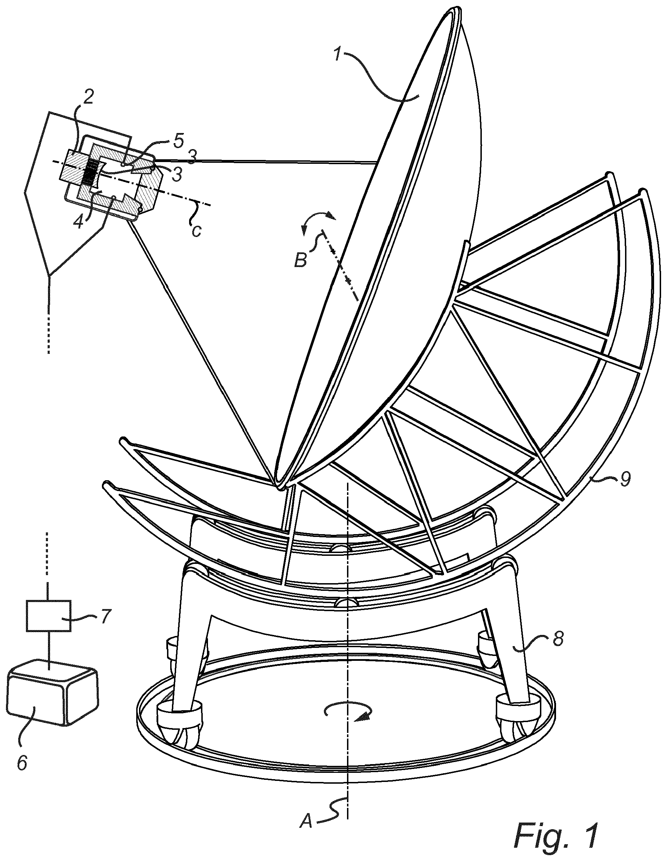

Figure 1 schematically illustrates an energy conversion system according to an embodiment of the present invention. The system generally comprises a sun concentrator, here in the form of a parabolic dish 1, and a Stirling engine 2. The Stirling engine has a radiation-to-heat exchanger 3 surrounded by a radiation chamber 4. The radiation chamber is located with its entrance in the focal point of the dish, and configured to receive concentrated solar radiation. The radiation-to-heat exchanger is further configured to contain the concentrated sun radiation and increase performance. The basic function of the Stirling engine is to convert solar radiation into mechanical energy, which in turn can be converted into electrical energy using an alternator or generator.

According to the present invention, the radiation chamber 4 is further provided with a burner arrangement 5, arranged to use the radiation chamber 4 as a combustion chamber for combustion of a liquid or gas fuel. The fuel can be provided to the burner 5 under pressure from a fuel storage 6. In case of a gas fuel, the fuel storage may be a pressurized gas tank, while in the case of a liquid fuel a fuel pump 7 may be used to provide the pressure. The burner is capable of generating sufficient heat convection and heat radiation inside the radiation chamber to operate the Stirling engine also at times when there is no, or insufficient, available sun radiation.

The combustion is preferably a "low pressure combustion", i.e. the pressure is typically below five bar.

The dish is operated by an actuator arrangement 8, 9, configured to adjust the orientation of the dish depending on the position of the sun so as to maximize the inflow of solar radiation into the radiation chamber. The arrangement here comprises a turning platform 8, configured to rotate the dish 1 around a vertical axis A. The arrangement further comprises a cradle 9 in which the dish is turnable around a horizontal axis B. During night time, and at any other time when the solar dish is not collecting solar radiation, the actuator arrangement may be configured to place the dish in an inactive resting position. As the dish may have a diameter of several meters, the resting position is preferably horizontal, so as to reduce forces caused by wind.

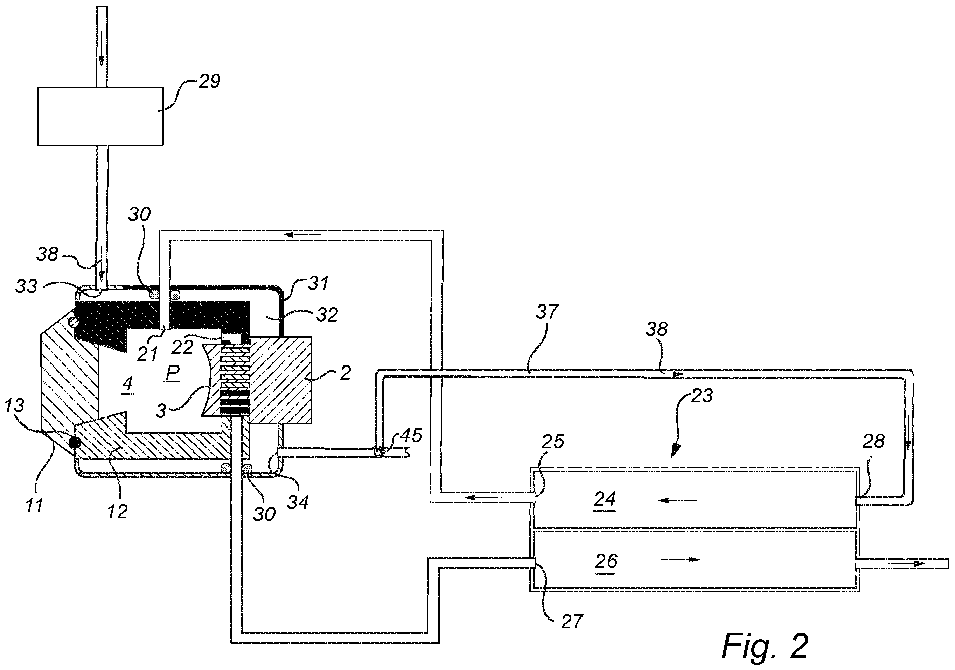

Selected parts of the heat conversion system, including the Stirling engine 2, its radiation-to-heat-exchanger 3 and the radiation chamber 4, are illustrated schematically in figure 2.

The details of the Stirling engine and its radiation-to-heat exchanger are known in the art, and will not be further described here.

In order to efficiently serve as a combustion chamber, the entrance of the radiation chamber needs to be closed during combustion. In the embodiment illustrated in figure 2, the radiation chamber 4 is closed with a movable cover 11. Such a cover can be operated to close the chamber when the system is operated in combustion mode, and then removed to allow sun radiation into the chamber during solar mode. The cover 11 is here sealed against the chamber walls 12 by means of a suitable sealing element 13.

It is noted that during alignment, i.e. when the dish 1 is operated in or out of the sun radiation, the entrance 14 of the radiation chamber may briefly be subjected to concentrated solar radiation. For this purpose, in absence of effective cooling of the entrance, selected portions of the entrance surfaces 15 may need to be shielded to withstand such radiation. In the illustrated embodiment, the movable cover 11 can serve to provide such sealing.

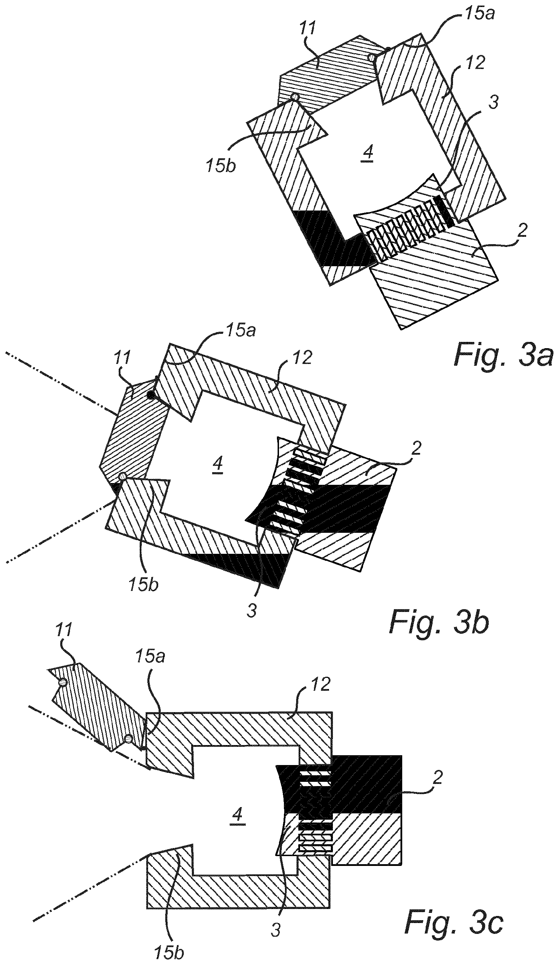

As illustrated in figure 3a-c, the chamber can be closed by the cover 11 when the dish 1 is not facing the sun (figure 3a). The cover is maintained in closed position as the dish is operated by the actuating arrangement 8, 9 to face the sun. At the final stage of such motion (figure 3b), concentrated solar radiation will impact the cover, but will be prevented to impact the entrance surfaces 15 or other parts of the chamber walls 12. When the dish 1 is in position, the cover can be removed (figure 3c), thereby allowing the concentrated solar radiation to enter the entrance 14 (without hitting the entrance surfaces 15).

Alternatively, if sufficiently effective cooling of the entrance is provided, e.g. water cooling, the movable cover can be removed first, before the dish is operated to directed towards the sun.

In another embodiment, the entrance of the radiation chamber is permanently closed by a transparent window, made e.g. of glass. Returning to figure 2, the chamber 4 is provided with an inlet 21 for introducing air into the radiation chamber 4 to enable combustion of the fuel, and an exhaust outlet 22 for removal of exhaust gases. In order to increase efficiency the system here includes a heat recuperator 23, configured to use the exhaust air to pre-heat the air which is supplied to the inlet. The recuperator has a primary side 24 with a primary outlet 25 fluidly connected to the inlet 21 of the combustion chamber and a secondary side 26 with a secondary inlet 27 fluidly connected to the exhaust outlet 22. The primary inlet 28 is connected to a fan, or pump 29, configured to create a flow of air through the primary side 24, the combustion chamber 4, and the secondary side 26.

The walls 12 of the radiation chamber need to sustain very high temperatures (in the order of 1500 degrees Celsius). Typically, they are made of a porous ceramic material, but other materials are also possible. If the material in the chamber walls are permeable to air, it may be advantageous, or even necessary, to provide at least parts of the outside of the chamber walls with an air-tight coating, in order to enable efficient combustion in the chamber. Such coating may be unnecessary if the walls themselves are sufficiently air-tight, or even completely air-tight.

The sealing coating is preferable flexible, i.e. it is capable of expanding with temperature without losing its sealing properties. As an example, a polymer material may be used, e.g. a silicone rubber.

In one embodiment, the chamber is composed of several separate wall partitions, joined together along joints which are less air tight than the walls (exhibit less air resistance). In solar mode, this is not a critical issue, but in combustion mode it may be necessary to seal such joints in order to avoid excessive leakage along the joints.

The radiation chamber 4 can further be enclosed by an enclosure 31. The enclosure may be made of metal or other suitable material, and creates an intermediate space 32 surrounding the radiation chamber. The enclosure 31 is further substantially sealed, although for practical reasons it will not be completely air-tight. For example, a controlled leakage may be used to cool sealing elements 30 provided to seal the inlet 21 and outlet 22. The enclosure has an inlet 33 arranged to introduce cooling air into the intermediate space, and an outlet 34 arranged to allow escape of air which has been heated by dissipated heat from the combustion chamber.

The outlet 34 can be connected to the recuperator inlet 28 via a conduit 37, in order to thereby recycle as much as possible of the heat dissipating through the walls of the chamber 4. An evacuation valve 45 may be arranged along the conduit 37 to allow discharge of air from the enclosure outlet 34.

During combustion, the pump can be configured to adaptively control the flow based e.g. on air mass flow. This flow is primarily governed by the amount of air required for the combustion process. The entire system is further configured to ensure that the pressure in the intermediate space 32 during combustion is higher than the pressure in the combustion chamber. It is noted that the pressure in the combustion chamber during combustion typically is below 5 bar, and possibly even below 1 bar.

In operation, the energy conversion system has two modes; a solar mode and a combustion mode. The decision to enter combustion mode may be scheduled based on time of day, or may be adaptive, based on the currently available sun-light.

In solar mode, the actuator arrangement 8, 9 (see figure 1) is operated so that the dish 2 faces the sun, and concentrated sun radiation enters the chamber 4. This concentrated radiation impacts the radiation-to-heat exchanger 3, which in turn provides heat for operation of the Stirling engine 2.

It is possible that the enclosure 31 may reduce heat dissipation from the outside of the chamber 4 such that the temperature of the intermediate space and any sealing coating of the chamber 4 risks reaching a too high temperature. In such a case, the pump may be activated during solar mode, to create a slight air flow through the intermediate space. In case of a design according to figure 2a, the flow 38 is supplied to the intermediate space 32, and the valve 45 is set to allow discharge of the entire flow. In case of a design according to figure 2b, the valve 39 is set so that the entire flow from the pump is directed to the intermediate space 32 (i.e. flow 40a is equal to flow 38). The valve 45 is again set to allow discharge of the entire flow.

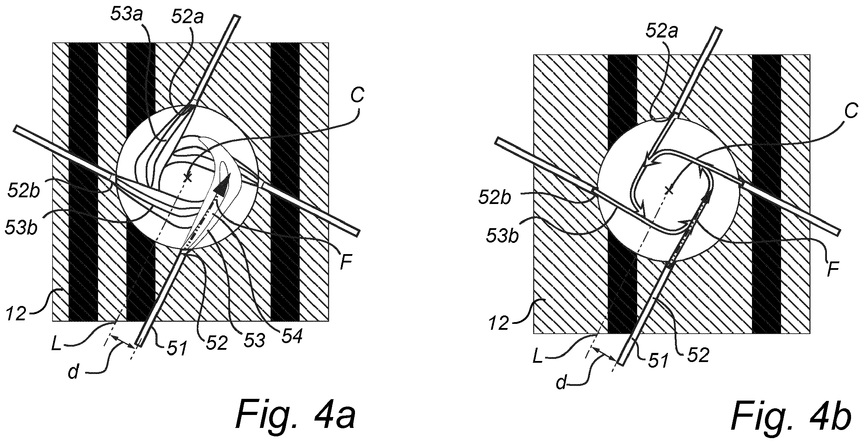

In combustion mode, the actuator arrangement 8, 9 is preferably operated so that the dish does not face the sun. Typically, it is operated to an inactive resting position. Further, if the radiation chamber 4 is not permanently closed as indicated in figure 4, the movable cover 11 has been operated to close the radiation chamber 4. Fuel is then provided by the fuel pump 7 to the burner arrangement 5, and is ignited to cause combustion inside the chamber 4, which now acts as a combustion chamber. Radiation and convection heat reaches the radiation-to-heat converter, which again provides heat for operation of the Stirling engine.

During combustion, the pump 29 creates an air flow 38 which is fed to the intermediate space 32 and to the primary side 24 of the recuperator 23, and further into the combustion chamber 4 via the inlet 21. At the same time, exhaust gases leave the combustion chamber 4 through the outlet 22, and is fed to the secondary side 26 of the recuperator, where they serve to pre-heat the air passing through the primary side 24.

Only serving as a non-restricting example, the air provided by the pump 29 is ambient air with a temperature in the order of 20-30 °C. In the intermediate space, this air may be heated to around 40 - 60 °C, before it is provided to the recuperator (figure 2a) or recombined with the air flow 40a (figure 2b). Depending on the design, the air reaching the recuperator may have a temperature of maybe 30 - 50 °C. The exhaust gases, on the other hand, may have a temperature in the order of 800-1000 °C, and may increase the temperature of the incoming air to 700 - 900 °C. The temperature of air leaving the secondary side of the recuperator may be as low as 100-150 °C.

With reference to figure 4a and 4b, the burner 5 comprises a set of fuel tubes 51 extending through the walls 12, each tube 51 connected to a nozzle 52 inside the chamber wall 12. Four tubes 51 and nozzles 52 are shown in figure 4a-b, but the burner 5 may have more nozzles, symmetrically arranged around the chamber periphery. It is noted that the nozzles should not be exposed to the high density solar radiation received from the dish 2 in solar mode. Therefore, the nozzles 52 are preferably placed so close to the chamber wall 12 that they are outside the main sun radiation direction along the central axis C. In the illustrated case, the nozzles are arranged in the wall 12.

Each nozzle 52 is configured to introduce pressurized gas or liquid fuel from the tank 6 (figure 1) into the chamber 4. The fuel is ignited by appropriate means (not shown) such as a spark plug, so that, in combustion mode, burning flames 53 are directed into the chamber 4 in a flame direction F. The flame direction of each flame is substantially transversal to the center axis C of the system, i.e. the main radiation reception direction. Preferably, the flame direction F can be slightly inclined towards the heat exchanger 3, with an angle between the flame direction F and a plane normal to the central axis C of for example 10 degrees.

As illustrated in figure 4a-b, the flame direction F of each flame is offset with respect to the center axis C, i.e. the flame is not directed towards the axis C. Instead, the flame direction is separated a distance d from a line L parallel with the flame direction through the center axis C. The distance d is here approximately half of the radius r of the chamber cross section. A different distance d is also possible, including a smaller ratio such as 25% of r or even 20% of r.

Figure 4a further illustrates how the flame 53a from a first nozzle 52a is directed towards the base of a second flame 53b emerging from a second nozzle 52b. Close to the nozzle 52b, the second flame 53b has a relatively high gas pressure, and this pressure will cause the distal portion of the first flame 53a to deviate from its flame direction and bend to eventually be aligned with the second flame 53b. This same process will take place in all flames 53, such that the four flames 53 combine to an aggregated flame resembling a rotating torus or toroid. Such arrangement of burner nozzles in a combustion chamber is sometimes referred to as "tangential firing". Figure 4b shows the shaping of the rotating flame more schematically.

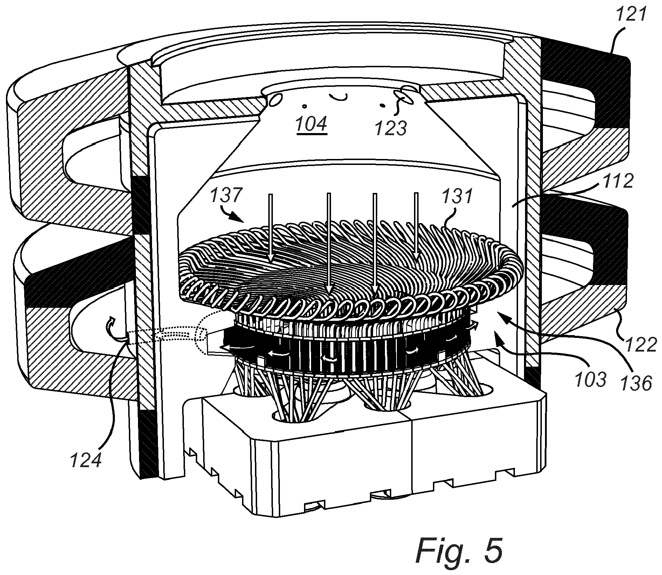

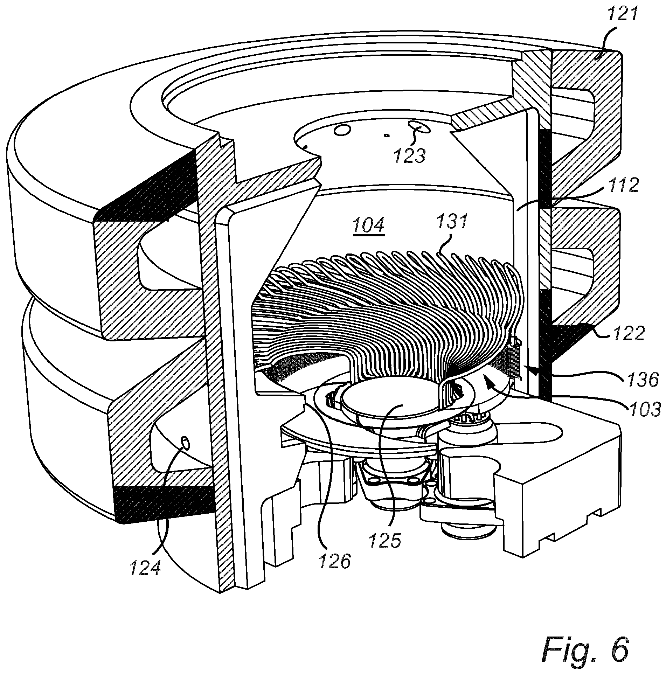

Figures 5 and 6 show a more detailed example of a design of the radiation chamber 104 having walls 112, and a radiation-to-heat exchanger 103 arranged inside the chamber 104. The cover 11 is not shown in figures 5-6, but can, as discussed above, be a permanent, transparent cover or a movable cover.

The chamber 104 is here surrounded by two annular manifolds; a first manifold 121, closer to the entrance, for introducing air for the combustion process, and a second manifold 122, closer to the Stirling engine, for exhausting combustion gases (the Stirling engine is not shown in figures 5 and 6, but is located below the chamber 104). Both manifolds 121, 122 are fluidly connected to the interior of the chamber, in the illustrated case by a plurality of openings 123, 124, distributed around the periphery of the chamber 104.

The openings 123 correspond to the channels 51 illustrated schematically in figure 4a-b. It is through these openings that the flames from the nozzles 52 will enter the chamber 104.

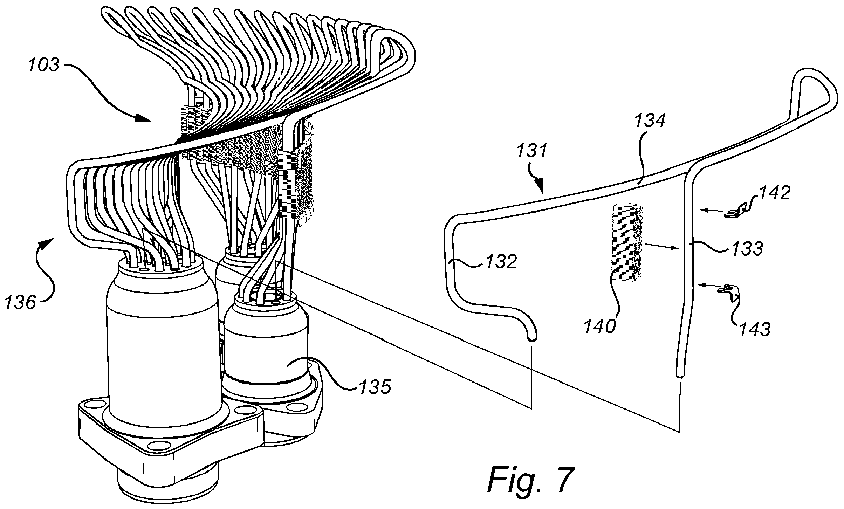

The radiation-to-heat exchanger 103 is here formed by a plurality of tube loops 131, each extending from the Stirling engine into the chamber 104. The tube loops 131, which will be described in more detail with reference to figure 6, contain a heat carrying medium, here referred to as a working gas, which is reciprocated during repeated heating to operate the Stirling engine. Several tube loops 131 may be connected to the same Stirling engine cylinder. For example, in the case of four cylinders, the tube loops will be divided into four quadrants. One such quadrant is shown in perspective in figure 7.

As shown most clearly in figure 6, a central radiation shield in the form of a disc 125 is arranged in the center of the radiation-to-heat exchanger, and configured to shield the Stirling engine and its related parts from direct heat radiation (in solar as well as combustion mode). Further, an annular radiation shield is formed by a protruding lip 126 of the chamber wall. The function of this radiation shield will be discussed below.

The details of the design of the radiation-to-heat exchanger 103 are illustrated more clearly in figure 7. Each loop 131 has a first, inner section 132, connected to a cylinder side of the Stirling engine, and a second, outer section 133, radially outside the inner section, connected to a regenerator side of the Stirling engine. In the illustrated case, the set of outer sections 133 are collected in two separate regenerator structures 135. This is a design choice, caused by the greater tangential distance between these sections compared to the inner sections.

In the illustrated case, these sections 132, 133 are both substantially parallel to the central axis of the system. These axially extending sections 132, 133 are connected by a U-shaped portion, or U-bend, 134, which extends radially outwards from the inner section 132, and also further into the chamber 104. As shown most clearly in figure 5, the U-bend 134 is also curved around the central axis in a helix path in order to maximize the area of tubes in the solar radiation path, such that the combined set of U-bends 134 form a "hat" 137 of a mushroom shape, slightly concave towards the chamber entrance. The "foot" 136 of the mushrom, i.e. the parallel inner and outer sections 132, 133, is located level with the second manifold 122 and the exhaust openings 124.

The front part of the radiation-to-heat-exchanger 103, i.e. the part facing the entrance of the chamber 104 forms a radiation exposed part of the radiation-to-heat exchanger 103. In the illustrated case, this front part is formed by the hat 137 of the mushroom shape as well as the inner section 132. As is clear e.g. from figure 5, the curvature of the tube loops 131 ensure that essentially no radiation can penetrate the hat 137. As a result, the outer section 133 of each tube loop 131 is substantially shielded from heat radiation. The set of outer sections 133 thus form a radiation shielded part of the radiation-to-heat exchanger.

At the same time, the U-shaped portions 134 are still slightly displaced from each other, so that combustion gases may pass through the hat 137, and reach the foot 136 of the mushroom shape.

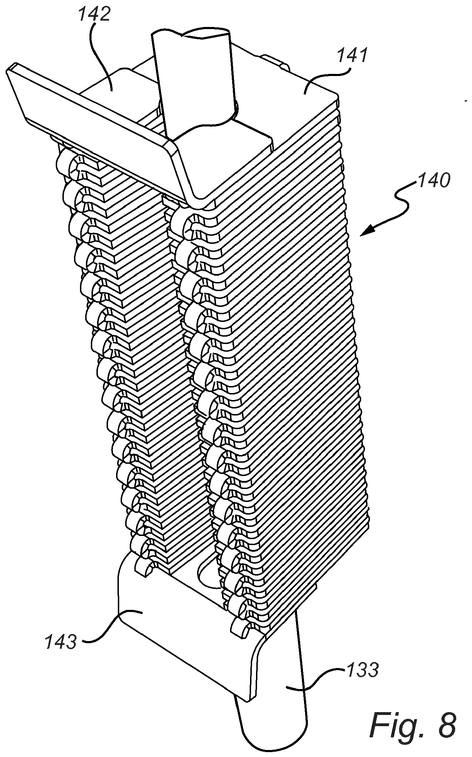

According to the illustrated embodiment, a heat convection structure 140 is attached to each outer section 133 of the tube loops 131. The heat convection structure is most clearly shown in figure 8. In the illustrated case, each heat convection structure 140 is formed by a sheet 141 of heat conducting material, e.g. a nickel-chromium alloy. The sheet has been a folded to a double meander shape extending on both sides of the tube, and provided with end plates 142, 143 extending radially out from the tube section 133. The structure 140 is fitted on the tube loop 131 from the inside, with one meander pattern on each side of the section 133, and then preferably brazed to the tube section 133 using heat resistant filler material. The filler material ensures satisfactory thermal connection between the heat convection structure and the tube. The end plates 142, 143 are attached to the double meander shape from the outside, again by brazing using heat resistive filler material.

Although the heat convection structures 140 are substantially shielded from direct heat radiation by the hat 137 of the radiation-to-heat exchanger, it may still be advantageous to provide additional shielding, especially of the part of the heat convection structure, including the end plate 142, which is adjacent to the radiation shielding part, here the hat 137. Such additional shielding could e.g. be provided by a protective ceramic layer arranged on the end plate 142. Alternatively, it could be formed as a separate shield in a ceramic material. In the illustrated case, such shielding is provided by the protruding lip 126, which extends slightly over the end plates 142.

Returning to figure 5, the flow of combustion gas is indicated by arrows. The annular exhaust manifold 122, and openings 124, ensure that the flow is directed from the radiation chamber 104 past the front part of the radiation-to-heat exchanger, i.e. through the U-bends 134 of the tube loops 131 forming the "hat" 137 of the "mushroom". The flow is then directed radially outwards past the outer sections 133 of the tube loops 131 and further through the openings 124. Along that path the flow will pass the heat convection structure 140, where a portion of its thermal energy will be transferred to the heat convection structure, and further to the working gas in the tubes.

As the radiation exposed part of the radiation-to-heat exchanger here extends radially outside the second sections 133, there is a risk that a portion of the combustion gases may escape on the outside of the outer sections 133 and the heat convection structures 140. For this reason, the lip 126 is designed to guide any such flow of combustion gas radially inwards over the heat convection structure 140 into the foot 136, thereby forcing also this flow to pass the outer sections 133 and the heat convection structures 140 before leaving the chamber 104 through the openings 124.

The effect of the heat convection structures 140 is essentially two-fold:
1) the convection surface is increased, thereby improving transfer of heat, and
2) the meander form with a plurality of narrow slits increases the flow velocity, again improving transfer of heat

The person skilled in the art realizes that the present invention by no means is limited to the preferred embodiments described above. On the contrary, many modifications and variations are possible within the scope of the appended claims. For example, the mechanical design of the radiation chamber may be different than that schematically indicated in the drawings. Further, the air flow control described with reference to figure 2 may be include additional elements and functions, such as additional sensory, control circuitry, valves and actuators. Even further, the details of the radiation-to-heat-exchanger may be different. The outer sections connected to the same Stirling cylinder may be connected to one single structure. Further, some or all of the tube loops may be integrated in a common structure, defining the tubes and possibly including a compartment common for all tube loops integrated therein.

## Claims

1. A hybrid energy conversion system comprising:
a sun concentrator for providing high density sun radiation,
a radiation-to-heat exchanger arranged in a radiation chamber and configured to receive high density sun radiation from the sun concentrator through an entrance of the radiation chamber in a main radiation reception direction along a central axis of the system,
a Stirling engine operable to convert heat from the radiation-to-heat exchanger into mechanical energy, and
a burner configured to generate combustion energy for operation of the Stirling engine by combustion of a suitable fuel,
**characterized by** wherein said combustion chamber has an exhaust outlet for removal of combustion gases from the chamber, said exhaust outlet at least partially enclosing the central axis,
wherein said exhaust outlet is arranged to create a flow of combustion gas from said entrance past a front portion of said radiation-heat-exchanger.

2. The burner is configured to use said radiation chamber as a combustion chamber, such that said combustion energy is generated inside the radiation chamber.

3. The hybrid energy conversion system according to claim 1 or 2, wherein the exhaust outlet comprises a plurality of openings in the radiation chamber, distributed around the central axis.

4. The hybrid energy conversion system according to any one of the preceding claims,
wherein the radiation-heat-exchanger comprises a set of tube loops connected to the Stirling engine and configured to conduct a heat carrying medium for operation of the Stirling engine, said tube loops being distributed around the central axis and extending axially into the radiation chamber, and
wherein said exhaust outlet is arranged to create a flow of combustion gas past the tube loops in a direction with a radial component with respect to the central axis.

5. The hybrid energy conversion system according to claim 4, wherein the radiation-to-heat-exchanger includes a radiation exposed part, facing the entrance of the radiation chamber, and a radiation shielded part which is substantially shielded from radiation by the radiation receiving part, and wherein said flow of combustion gas is directed first past said radiation exposed part and then past said radiation shielded part.

6. The hybrid energy conversion system according to claim 5,
wherein each tube loop has an inner section extending along the central axis and an outer section extending along the central axis radially outside the inner section, and a U-bend a distance into the radiation chamber connecting the inner and outer section, and
wherein said outer sections belong to said radiation shielded part.

7. The hybrid energy conversion system according to claim 6, wherein said U-bends are curved to form a structure extending in a plane normal to the central axis, and substantially preventing heat radiation from penetrating axially past said structure, said structure belonging to said radiation exposed part.

8. The hybrid energy conversion system according to claim 7, wherein said structure has an annular shape, extending radially from said inner sections to a location proximal to the chamber wall, thereby substantially protecting the outer sections of the tube loops from heat radiation.

9. The hybrid energy conversion system according to claim 7 or 8, wherein said structure has a concave surface facing the entrance of the radiation chamber.

10. The hybrid energy conversion system according to one of claims 6-9, wherein said outer sections are substantially parallel to the central axis.

11. The hybrid energy conversion system according to one of claims 6 - 11, wherein the outer sections are provided with heat convection structures configured to promote heat convection from said combustion gas to the heat carrying medium in the tube loops.

12. The hybrid energy conversion system according to claim 5, wherein at least a portion of each tube loop extending in the radiation shielded part is provided with heat convection structures configured to promote heat convection from said combustion gas to the heat carrying medium in said tube loops.

13. The hybrid energy conversion system according to claim 11 or 12, wherein said heat convection structures are formed separately from said tube loops and attached thereon.

14. The hybrid energy conversion system according to one of claims 11 - 13, further comprising an additional radiation shield for protecting a portion of the heat convection structures adjacent to the radiation exposed part.

15. The hybrid energy conversion system according to any one of the preceding claims, further comprising a heat recuperator having a primary side with a primary inlet and a primary outlet, and a secondary side with a secondary inlet and a secondary outlet, wherein said primary outlet is fluidly connected to an inlet of the combustion chamber, and wherein said secondary inlet is fluidly connected to said exhaust outlet.
